# DEMANDE DE BREVET EUROPEEN

(11) **EP 1 475 919 A2**
(43) Date de publication de la demande: **10.11.2004**
(21) Numéro de dépôt: 04300079.3
(22) Date de dépôt: 12.02.2004
(51) Int. Cl.: H04L 9/06

(54) **Procédé et circuit anti-fraude pour registre de circuit intégré contenant des données obtenues à partir de quantités secrètes**

(30) Priorité: 13.02.2003 FR 0301781
(71) Demandeur: STMicroelectronics S.A., 92120 Montrouge (FR)
(72) Inventeur: Teglia, Yannick, 13011 Marseille (FR); Liardet, Pierre-Yvan, 13790 Peynier (FR)
(74) Mandataire: de Beaumont, Michel

(57) **Abrégé**

L'invention concerne un circuit intégré et un procédé anti-fraude mettant en oeuvre au moins une opération (4) faisant intervenir au moins une quantité secrète, et comprenant fonctionnellement en amont et en aval de l'opérateur, au moins un registre source (Rs) et au moins un registre de destination (Rd), et des moyens pour charger un nombre aléatoire (A) au moins dans le registre de destination.

## Description

La présente invention concerne le domaine des circuits intégrés et plus particulièrement la protection de données ou quantités secrètes manipulées par des circuits intégrés contre des tentatives de fraude visant à pirater ces données.

Un exemple d'application de la présente invention concerne le domaine des cartes à puces dans lesquelles des quantités secrètes servant à chiffrer ou crypter des données venant de l'extérieur sont contenues dans la puce de circuit intégré.

Parmi les fraudes possibles, l'invention se préoccupe plus particulièrement des tentatives de fraudes basées sur un examen de la signature d'un paramètre physique du circuit intégré exécutant la fonction de chiffrement ou plus généralement d'une opération mettant en oeuvre une quantité secrète. Cette signature physique sur le circuit intégré peut correspondre, par exemple, à l'évolution de sa température, de sa consommation en courant ou de son rayonnement électromagnétique. Les attaques par analyse statistique de consommation en courant d'un circuit intégré sont connues sous la dénomination DPA (Differential Power Analysis). Ces attaques consistent à émettre des hypothèses sur la ou les clés secrètes manipulées alors que l'on connaît les données d'entrée dans l'algorithme (provenant de l'extérieur) ainsi que l'algorithme lui-même. Dans la mesure où l'algorithme est connu, on sait comment la quantité secrète est mélangée à la donnée d'entrée par cet algorithme. En faisant varier les données d'entrée sur la base d'une même hypothèse de clé, on peut analyser la source de fuite (par exemple, la consommation en courant) du circuit intégré et obtenir une signature (trace) moyenne qui peut conduire à la découverte de la quantité secrète en tombant sur la bonne hypothèse.

Les attaques par analyse de la consommation de type DPA sont décrites, par exemple, dans l'article "Differential Power Analysis", de Kocher, Jaffe et Jun publié par Springer Verlag LNCS 1666, en 1999 dans le cadre de la conférence CRYPTO 99 (pages 388-397).

Plus généralement, l'article "Side Channel Cryptoanalysis of Product Ciphers" de J. Kelsey, P. Schneier, D. Wagner et C. Hall paru dans Journal of Computer Security Vol 8, N. 2-3, 2000, p. 141-158, décrit le principe d'attaques auxquelles s'applique la présente invention.

En pratique, les informations sensibles aux attaques par analyse de signature physique sont présentes au niveau des registres de stockage temporaire des données et des clés sous la forme de fronts de commutation montants ou descendants (0 vers 1, ou 1 vers 0), c'est-à-dire lors des introductions des données dans les registres.

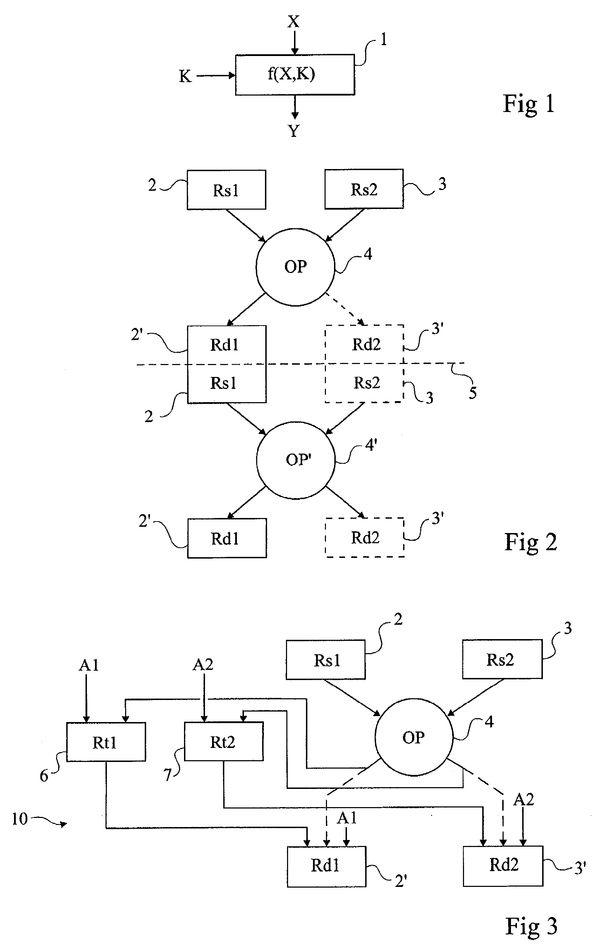

La figure 1 illustre un exemple classique de fonction algorithmique du type à laquelle s'applique la présente invention.

Une donnée d'entrée X est combinée par une fonction f (bloc 1, f(X, K)), avec une quantité secrète K contenue dans le circuit intégré exécutant la fonction f. Le résultat fourni est une donnée Y correspondant, dans cet exemple, à la donnée X chiffrée par la clé K.

La figure 2 illustre, de façon arbitraire et à titre d'exemple deux étapes successives d'exécution d'une fonction de chiffrement (par exemple, la fonction f de la figure 1). Une telle exécution fait appel à des registres de stockage des données numériques. Ces registres ont été symbolisés en figure 2 sous la forme de deux registres d'entrée 2 (Rs1) et 3 (Rs2) constituant des registres sources pour un opérateur 4 (OP) exécutant une fonction logique ou arithmétique sur les contenus des registres 2 et 3. Le résultat de l'opération 4 (OP) est stocké dans un registre de destination 2' (Rd1) et, si l'opération OP fournit deux mots résultats, dans un deuxième registre destination 3' (Rd2) représenté en pointillés en figure 2.

Si la fonction f à exécuter comprend plusieurs opérations successives, les registres de destination 2' et 3' de la première étape ou opération 4 deviennent généralement les registres sources 2 et 3 d'une deuxième étape ou opération 4' (opérateur OP'). En figure 2, les deux opérations successives ont été séparées par un pointillé 5. De façon similaire à la première étape, l'opération 4' fournit son résultat dans un ou plusieurs registres de destination référencés 2' et 3'.

Classiquement, à chaque nouvelle exécution d'un algorithme, les registres sources et de destination, qu'ils soient communs ou distincts selon les applications, sont réinitialisés à une valeur prédéterminée (par exemple, zéro). Par la suite, les états qu'ils contiennent dépendent des introductions des différentes données et notamment de la quantité secrète qui est susceptible d'être piratée. Le registre le plus sensible est le registre de destination dans la mesure où le registre source, s'il n'a pas été réinitialisé, correspond à un registre de destination transformé par une opération précédente.

La présente invention vise à améliorer la sécurité des circuits intégrés manipulant des données secrètes contre des attaques par analyse de signature physique. Plus particulièrement, l'invention vise à améliorer la protection des contenus des registres et notamment des registres de destination des opérations exécutées au sein du circuit intégré et mettant en oeuvre des quantités secrètes.

L'invention vise également à proposer une solution qui soit compatible avec les algorithmes de chiffrement et plus généralement avec les algorithmes de manipulation de données secrètes classiques. En particulier, l'invention vise à ne nécessiter aucune modification de l'algorithme pour la mise en oeuvre de la protection prévue, et à rester totalement transparente pour l'utilisateur du circuit.

L'invention vise en outre à proposer une solution qui convienne pour protéger indifféremment le contenu de registre(s) de destination de résultat(s) d'opération(s) servant de registre(s) source(s) à une opération suivante, ou le contenu de registre(s) contenant le résultat final.

Pour atteindre ces objets et d'autres, la présente invention prévoit un circuit intégré mettant en oeuvre au moins une opération faisant intervenir au moins une quantité secrète, et comprenant fonctionnellement en amont et en aval de l'opérateur, au moins un registre source et au moins un registre de destination, le circuit comportant des moyens pour charger un nombre aléatoire ou pseudo-aléatoire au moins dans le registre de destination.

Selon un mode de réalisation de la présente invention, ledit nombre aléatoire est chargé dans le registre de destination avant transfert du résultat de l'opération vers ce registre.

Selon un mode de réalisation de la présente invention, au moins un registre temporaire est prévu pour stocker le contenu du registre source ou du résultat de l'opération avant transfert vers le registre de destination.

Selon un mode de réalisation de la présente invention, des moyens pour charger le registre temporaire avec une quantité aléatoire sont prévus.

L'invention prévoit également un procédé anti-fraude consistant à rendre aléatoire le contenu d'un registre de destination du résultat d'un opérateur mettant en oeuvre au moins une quantité secrète, consistant à introduire une quantité aléatoire dans le registre de destination avant chaque chargement d'un résultat dans ce dernier.

Selon un mode de mise en oeuvre de la présente invention, le résultat de l'opérateur est transféré vers un registre temporaire avant chargement dans le registre de destination.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
les figures 1 et 2 décrites précédemment sont destinées à exposer l'état de la technique et le problème posé ;
la figure 3 représente un mode de réalisation d'un circuit intégré exécutant un algorithme à manipulation de quantité secrète selon la présente invention ; et
les figures 4A, 4B et 4C illustrent, sous forme d'organigrammes, trois exemples de mise en oeuvre du circuit de la figure 3.

Les mêmes éléments ont été désignés par les mêmes références aux différentes figures. Pour des raisons de clarté, seuls les éléments et étapes de procédé qui sont nécessaires à la compréhension de l'invention ont été représentés aux figures et seront décrits par la suite. En particulier, les fonctions algorithmiques proprement dites et notamment les opérations de manipulation des données contenues dans les registres n'ont pas été détaillées, l'invention s'appliquant quelle que soit l'opération mise en oeuvre, qu'il s'agisse d'une opération arithmétique ou logique, d'une opération de copie ou de transfert etc., et quelles que soient les données manipulées.

Une caractéristique de la présente invention est de masquer l'introduction d'au moins un résultat fourni par au moins un opérateur dans au moins un registre de destination par l'introduction préalable d'une donnée aléatoire dans ce registre.

Une caractéristique d'un mode de réalisation préféré de la présente invention est de prévoir au moins un registre intermédiaire entre le ou les opérateurs et le ou les registres de destination, afin de permettre l'introduction d'au moins une donnée aléatoire dans le ou les registres de destination. Selon ce mode de réalisation, des données aléatoires sont également introduites dans le ou les registres intermédiaires avant tout transfert depuis un opérateur.

La figure 3 représente, de façon très schématique et sous forme de blocs, un mode de réalisation d'une cellule 1 de calcul selon la présente invention.

Comme précédemment, un ou plusieurs (ici, deux) registres 2 (Rs1) et 3 (Rs2) contiennent des données à soumettre à une opération. Les contenus de ces registres sont transférés vers un circuit 4 exécutant une opération OP de l'algorithme concerné. Un ou plusieurs (ici, deux) registres 2' (Rd1) et 3' (Rd2) sont destinés à contenir le ou les résultats fournis par l'opérateur 4. Les registres de destinations 2' et 3' peuvent constituer ou non des registres sources d'une opération ultérieure.

Selon le mode de réalisation représenté, l'opérateur 4 est connecté en entrée d'un ou plusieurs (ici, deux) registres temporaires 6 (Rt1) et 7 (Rt2), de préférence en même nombre que les registres de destination. Ces registres temporaires sont destinés à recevoir les résultats fournis par l'opérateur 4 avant leur transfert dans les registres de destination 2' et 3', respectivement.

Les registres de destination 2' et 3' ainsi que les registres temporaires 6 et 7 éventuels sont susceptibles d'être préchargés par des données aléatoires. Cette fonction est illustrée en figure 3 par des bornes d'entrée supplémentaires des registres 2', 3', 6 et 7 recevant des mots de données aléatoires A1 pour les registres 2' et 6 ou A2 pour les registres 3' et 7.

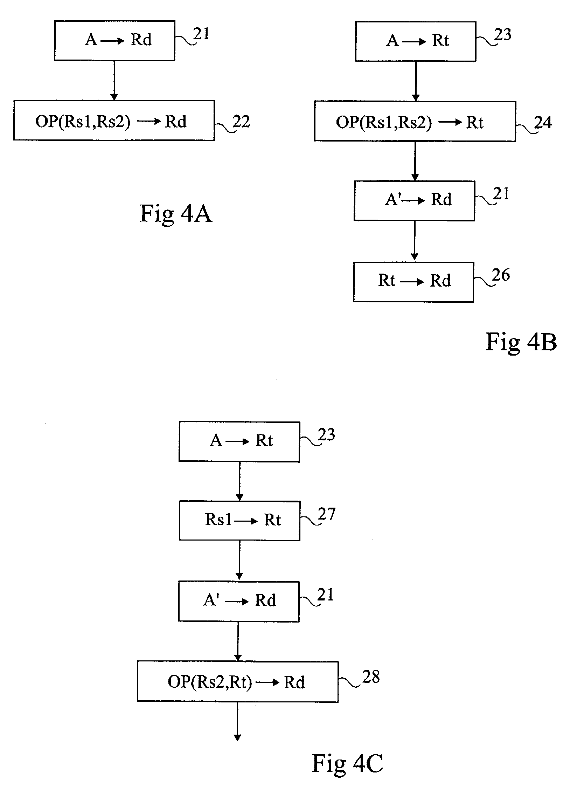

En figure 3, les liaisons de l'opérateur 4 aux registres 2' et 3' ont été illustrées en pointillés afin de faire ressortir leur caractère optionnel comme on le verra par la suite en relation avec les descriptions d'exemple de figures 4A à 4C.

Selon l'invention, avant chaque chargement d'un résultat opératoire dans un registre de destination, celui-ci est rempli par un nombre aléatoire. Cette introduction d'aléa s'effectue au moyen d'au moins un générateur de nombres aléatoires ou pseudo-aléatoire classique qui n'a pas besoin d'être détaillé.

Ensuite, selon le type d'opération et d'algorithme, le ou les résultats de l'opérateur 4 sont, soit stockés dans le ou les registres de destination 2' et 3', à la place des nombres aléatoires A1 et A2, soit stockés dans le ou les registres temporaires 6 ou 7 comme cela va être mieux compris par la suite en relation avec la description des figures 4A à 4C. Bien entendu, la taille des nombres aléatoires générés est adaptée à la taille des nombres résultats issus de l'opérateur 4.

Bien que cela soit préférable, on notera qu'il n'est pas indispensable que les nombres aléatoires chargés dans les différents registres soient différents les uns des autres, pourvu que ces nombres changent régulièrement, de préférence à chaque nouvelle opération. Ainsi, un pirate éventuel n'est pas capable d'exploiter les signatures physiques issues des changements d'états des registres de destination dans la mesure où ces changements partent, de préférence à chaque fois, d'un état différent.

Aux figures 4A à 4C, on se réfère à des exemples n'utilisant qu'un seul registre de destination. On notera toutefois que tout ce qui va être exposé en relation avec ces exemples s'applique bien entendu au cas où plusieurs registres de destination sont utilisés ainsi qu'au cas où un ou plusieurs registres de destination deviennent les registres sources de l'opération suivante.

La figure 4A représente un premier exemple selon lequel le résultat de l'opération 4 combinant les données des registres 2 et 3 doit être stocké dans un registre de destination unique. Dans ce cas, on commence selon l'invention par stocker (bloc 21) un nombre aléatoire A dans un registre de destination Rd. Puis, une fois l'opération exécutée, le résultat OP(Rs1, Rs2) représentant l'application de l'opérateur 4 aux contenus des registres Rs1 et Rs2 est stocké (bloc 22) dans le registre Rd.

Un avantage est alors que le changement d'état du registre Rd depuis la donnée aléatoire A vers le résultat de l'opération ne peut pas être utilisé par un pirate exploitant une analyse statistique de consommation ou de signature physique. En effet, l'aléa A changeant à chaque exécution de l'opération, il changera à chaque variation de la donnée d'entrée sur la base d'une même hypothèse de clé, et ne fournira donc pas de résultat exploitable pour le pirate.

La figure 4B illustre un deuxième exemple selon lequel on utilise un registre temporaire. Selon cet exemple, à chaque exécution de l'opération, on commence par introduire (bloc 23) un premier aléa A dans un registre temporaire Rt. Dans une deuxième étape, le résultat OP (Rs1, Rs2) de l'opérateur 4 est stocké (bloc 24) dans le registre temporaire Rt. Puis, on introduit (bloc 21) un deuxième nombre aléatoire A' dans le registre de destination Rd. Enfin, le contenu du registre temporaire Rt est transféré (bloc 26) au registre de destination Rd.

Selon un premier exemple où le registre de destination Rd est confondu au registre source (registre rebouclé sur le même opérateur), on veillera à maintenir l'introduction de l'aléa dans le registre de destination une fois que le registre a été déchargé de sa donnée d'entrée, c'est-à-dire après l'étape 24.

Selon un autre exemple, on pourra inverser les étapes 24 et 25 et introduire l'aléa A' dans l'exécution de la séquence. La seule contrainte est que l'étape 23 précède l'étape 24 et que l'étape 25 précède l'étape 26.

La figure 4C illustre un troisième exemple d'application du circuit de l'invention. Selon cet exemple, on commence par introduire (bloc 23) un aléa A dans un registre temporaire Rt. Puis, le contenu du registre source Rs1 est transféré (bloc 27) vers le registre temporaire Rt. Un deuxième aléa A' est stocké (bloc 21) dans le registre de destination. Enfin, on exécute l'opération de combinaison du contenu du registre Rs2 et du registre temporaire Rt, et on stocke (bloc 28) le résultat OP(Rs2, Rt) dans le registre Rd. Là encore, l'ordre des étapes n'est qu'un exemple pourvu que l'étape 21 soit avant l'étape 28 et que l'étape 23 soit avant l'étape 27.

L'exemple de la figure 4C concerne plus particulièrement le cas où le registre de destination Rd1 correspond au registre source Rs1, ce qui impose de décharger son contenu dans le registre temporaire avant d'introduire un aléa dans le registre de destination.

On notera que le ou les transferts du ou des registres sources vers le ou les registres temporaires (figure 4C) n'ont pas été illustrés par des liaisons fonctionnelles en figure 3. Cette variante est néanmoins possible.

Un avantage de l'invention est que sa mise en oeuvre ne nécessite aucune modification de l'algorithme protégé. Seuls l'organisation des transferts de données est modifiée.

Bien entendu, la présente invention est susceptible de diverses variantes et modifications qui apparaîtront à l'homme de l'art. En particulier, sa réalisation pratique est à la portée de l'homme du métier à partir des indications fonctionnelles données ci-dessus. De plus, à partir du moment où le circuit intégré est adapté pour pouvoir introduire un ou plusieurs aléas dans les registres de travail associés aux opérateurs d'exécution des algorithmes, plusieurs cas de figures peuvent être envisagés dont seulement certains exemples ont été décrits ci-dessus. En particulier, le recours à des registres temporaires n'est pas indispensable. De plus, les éventuels transferts vers des registres temporaires peuvent être effectués soit pour les données sources soit pour les données de destination, pourvu que le registre de destination puisse être rempli avec un aléa avant qu'on y introduise le résultat de l'opération. En outre, l'opération entre les registres source et de destination peut être n'importe quelle opération mise en oeuvre par un processeur et modifiant un registre (par exemple, l'opération de copie d'un registre dans un autre). Enfin, le registre de destination pourra consister en un registre de drapeau (flag) ne contenant qu'un bit, pré-positionné selon l'invention de façon aléatoire.

## Revendications

1. Circuit intégré mettant en oeuvre au moins une opération (4) faisant intervenir au moins une quantité secrète (K), et comprenant fonctionnellement en amont et en aval de l'opérateur, au moins un registre source (Rs) et au moins un registre de destination (Rd), **caractérisé en ce qu'**il comporte :
des moyens pour charger un nombre aléatoire (A) ou pseudo-aléatoire au moins dans le registre de destination ; et
au moins un registre temporaire (Rt) de stockage du contenu du registre source (Rs) ou du résultat de l'opération avant transfert vers le registre de destination (Rd).

2. Circuit selon la revendication 1, dans lequel ledit nombre aléatoire (A) est chargé dans le registre de destination (Rd) avant transfert du résultat de l'opération vers ce registre.

3. Circuit selon la revendication 1 ou 2, dans lequel sont prévus des moyens pour charger le registre temporaire avec une quantité aléatoire (A).

4. Procédé anti-fraude consistant à rendre aléatoire le contenu d'un registre de destination (Rd) du résultat d'un opérateur (4) mettant en oeuvre au moins une quantité secrète (K), **caractérisé en ce qu'**il consiste à introduire une quantité aléatoire (A) dans le registre de destination (Rd) avant chaque chargement d'un résultat dans ce dernier, le résultat de l'opérateur (4) étant transféré vers un registre temporaire (Rt) avant chargement dans le registre de destination (Rd).

5. Procédé selon la revendication 4, dans lequel le circuit intégré est conforme à l'une quelconque des revendications 1 à 3.
